Europäisches Patentamt

European Patent Office

Office européen des brevets

(19)

(11) Veröffentlichungsnummer: **0 197 312 B1**

(12) **EUROPÄISCHE PATENTSCHRIFT**

(45) Veröffentlichungstag der Patentschrift: **13.06.90**

(21) Anmeldenummer: **86103024.5**

(22) Anmeldetag: **07.03.86**

(51) Int. Cl.⁵: **H 04 Q 3/58, H 04 M 3/24**

(54) Schaltungs-Betriebsverfahren für Fernmeldevermittlungsanlagen, insbesondere Fernsprechvermittlungsanlagen, mit an Vermittlungsstellen über Verbindungskanäle angeschlossenen Untervermittlungsstellen, insbesondere Konzentratoren.

(30) Priorität: **03.04.85 DE 3512274**

(43) Veröffentlichungstag der Anmeldung:
**15.10.86 Patentblatt 86/42**

(45) Bekanntmachung des Hinweises auf die
Patenterteilung:
**13.06.90 Patentblatt 90/24**

(84) Benannte Vertragsstaaten:
**AT BE CH DE FR GB IT LI NL SE**

(56) Entgegenhaltungen:
**INTERNATIONAL SWITCHING SYMPOSIUM,
25.-29. Oktober 1976, Seiten 223-4-1 - 223-4-8,
Kyoto, JP; N.J. SKAPERDA et al.: "Generic
digital switching system"**

**NTC' 77 CONFERENCE RECORD, Band 3, Seiten
39:5-1 - 39:5-7, IEEE, New York, US; C.G. SVALA
et al.: "DSS-1 - a digital local switching system
with remote line switches"**

(73) Patentinhaber: **Siemens Aktiengesellschaft
Wittelsbacherplatz 2
D-8000 München 2 (DE)**

(72) Erfinder: **Mattis, Renate
Brehmstrasse 212
D-8000 München 90 (DE)**
Erfinder: **Renz, Gerhard, Dipl.-Ing. (FH)
Keplerweg 5
D-8033 Martinsried (DE)**
Erfinder: **Günther, Seidel, Ing. (grad.)
August-Zeune-Weg 4
D-8000 München 70 (DE)**
Erfinder: **Übelhack, Heinrich, Ing. (grad.)
Am Büchl 35
D-8024 Oberhaching (DE)**
Erfinder: **Homer, Russel D.
Wolfratshauserstrasse 135a
D-8000 München 71 (DE)**

Courier Press, Leamington Spa, England.

**Beschreibung**

Die Erfindung betrifft ein Schaltungs-Betriebsverfahren für Fernmeldevermittlungsanlagen, insbesondere Fernsprechvermittlungsanlagen, in denen an eine zentralgesteuerte Vermittlungsstelle wenigstens eine Untervermittlungsstelle über belegbare Verbindungskanäle jeweils zweier voneinander unabhängiger Kanalsysteme angeschlossen ist, und in denen diese Verbindungskanäle in vorgegebenen Anzahlen zu zwei Übertragungssystemen (zum Beispiel Trägerfrequenzsystemen, Zeitmultiplexsystemen, PCM-Systemen und dergleichen) mit jeweils einem pro System gemeinsamen Übertragungsmedium und jeweils zwei pro System gemeinsamen Endgeräten gehören, und in denen je einer der Kanäle jedes der beiden Übertragungssysteme als Steuersignalkanal verwendet ist, und in denen Teilnehmeranschlußschaltungen von an die Untervermittlungsstelle angeschlossenen Teilnehmerstellen durch jede von zwei in der betreffenden Untervermittlungsstelle vorgesehene, je einem der beiden Übertragungssysteme zugeordnete und unabhängig voneinander arbeitende Prozessoren zyklisch angesteuert und zur Aufnahme von über die Teilnehmerleitung eintreffenden Schaltkennzeichen, zum Beispiel den Beginn einer beabsichtigten Verbindungsherstellung anzeigenden Initialkennzeichen, ferner Wahlkennzeichen, Sonderkennzeichen, Auslösekennzeichen und dergleichen, abgetastet werden, und in denen die Prozessoren bei einer Störung ihres jeweiligen Übertragungssystems einen sich vom Normalbetriebszustand unterscheidenden Notbetriebszustand einnehmen.

Eine Schaltungsanordnung, mit der ein Schaltungs-Betriebsverfahren der zuvor angegebenen Art durchführbar ist, ist bereits durch einen Artikel in NTC'77 Conference Record, Band 3, Seiten 39:5-1—39:5-7, IEEE New York, US; C. G. Svala et al.: "DSS-1-a digital local switching system with remote line switches" bekannt. Ferner ist auf die DE—A—3 224 459 hinzuweisen.—Es ist deshalb bereits bekannt, daß bei Störung der beiden Kanalsysteme in dem Konzentrator ein Notbetrieb aufrechterhalten wird, inden Verbindungen zwischen Teilnehmerstellen, die an ein und denselben Konzentrator angeschlossen sind, weiterhin hergestellt werden können. Es wird also ein Inselamtsbetrieb fortgesetzt, bei dem nur Internverkehr abgewickelt wird.—Darüber hinaus wird ferner der Betrieb der beiden Konzentratorprozessoren für den Betriebsfall beschrieben, daß das Kanalsystem des einen der beiden Konzentratorprozessoren gestört ist, das des anderen aber nicht. In diesem Zusammenhang wird angegeben, daß einer der beiden Konzentratorprozessoren nur den Internverkehr (entsprechend dem erwähnten "Inselamtsbetrieb") abwickelt, der andere nur den Externverkehr, und zwar über das noch intakte Kanalsystem diese Konzentratorprozessors. Da bei einer jeden Belegung, also immer wenn ein Teilnehmer eine Verbindung herzustellen wünscht und hierzu die Teilnehmerleitungsschleife über seine Teilnehmerstation schließt, noch nicht erkennbar ist, ob es sich dabei um eine herzustellende Internverbindung oder eine herzustellende Externverbindung handelt, ist in dem genannten bekannten Fall vorgesehen, daß ein Datenaustausch zwischen den beiden Konzentratorprozessoren stattfindet, damit eine Verbindungsherstellung immer von demjenigen Konzentratorprozessor durchgeführt wird, der in diesem besonderen Betriebsfall jeweils dafür zuständig ist.

Zur Erzielung eines hohen Maßes an Störunanfälligkeit ist es zweckmäßig, die Konzentratorprozessoren so zu gestalten, daß sie möglichst völlig unabhängig voneinander arbeiten, damit nicht eine gegebenenfalls auf dem einen der beiden auftretende Störung sich auf den anderen auswirken kann. Es ist deshalb vorteilhaft, die beiden Konzentratorprozessoren völlig voneinander zu entkoppeln und sie gänzlich unabhängig voneinander arbeiten zu lassen. Das Vorhandensein zweier voneinander unabhängiger Kanalsysteme gewährtleistet zudem einen ausreichenden Notbetrieb für den Fall, daß eines der beiden Kanalysysteme ausfällt, während das andere noch intakt ist. In diesem Zusammenhang ist beachtlich, daß ein Konzentratorprozessor, dessen Kanalsystem gestört ist, Inselamtsbetrieb nur abwickeln darf, wenn Verbindungen über die vorgeordnete Vermittlungsstelle überhaupt nicht mehr hergestellt werden können. Da aber ein gegenseitiger Informationsaustausch zwischen den beiden Konzentratoren aus den angegebenen Gründen nicht stattfinden soll, besteht für einen Konzentratorprozessor, dessen zugeordnetes Kanalsystem gestört ist, während er selbst aber noch intakt ist, das Problem, daß er eine Orientierungshilfe braucht, wonach er Inselamtsbetrieb durchführen muß oder dies nicht darf.

Für die Erfindung besteht die Aufgabe, in einer Schaltungsanordnung der Eingangs angegebenen Art die Abwicklung des Notbetriebs (Inselamtsbetrieb) ohne eine direkte gegenseitige Beeinflussung der beiden Konzentratorprozessoren zu bewerkstelligen.

Die Erfindung löst die gestellte Aufgabe dadurch, daß die Prozessoren bei einer Störung ihrer eigenen Funktionen einen sich ebenfalls vom Normalbeitriebszustand sowie vom Notbetriebszustand unterscheidenden Gestörtzustand einnehmen, daß jeder der Prozessoren bei Ansteuerung der Teilnehmeranschlußschaltungen jeweils seinen Betriebszustand jeder von ihnen meldet, daß die Teilnehmeranschlußschaltungen den Betriebszustand jedes der beiden Prozessoren speichern, und daß die Teilnehmeranschlußschaltungen ihre Schaltkennzeichen bei Normalbetriebszustand beider Prozessoren sowie bei Notbetriebszustand beider Prozessoren jedem der beiden Prozessoren anbieten, bei Normalbetriebszustand eines der beiden Prozesoren und Notbetriebszustand des anderen der beiden Prozessoren nur dem Prozessor im Normalbetriebszustand anbieten und bei Notbetriebszustand eines der beiden Prozessoren und bei Gestörtzustand des anderen der beiden Prozessoren nur dem Prozessor im Notbetriebszustand anbieten.

Meldet also ein Prozessor bei Ansteuerung einer Teilnehmeranschlußschaltung den Normalbetriebszustand oder den Gestörtzustand, so liegen bereits eindeutige Verhältnisse vor, in dem diese Teilnehmeranschlußschaltung ein in ihr gespeichertes Schaltkennzeichen dem Prozessor anbietet bzw. nicht anbietet. Meldet aber ein Prozessor bei Ansteuerung einer Teilnehmeranschlußschaltung den Notbetriebszustand, so hängt ein Anbieten eines in der Teilnehmeranschlußschaltung gespeicherten Schaltkennzeichens jeweils davon ab, ob sich der andere Prozessor im Normalbetriebszustand befindet, oder ob er sich ebenfalls im Notbetriebszustand oder im Gestörtzustand befindet. Da zwischen den beiden Prozessoren ein direkter Informationsaustausch absichtlich weggelassen wurde, ist in jeder Teilnehmeranschlußschaltung der momentane Betriebszustand jedes der beiden Prozessoren gespeichert. Hieraus ergibt sich bei Ansteuerung einer jeden Teilnehmeranschlußschaltung durch einen Prozessor, der sich im Notbetriebszustand befindet, ob er ein in ihm gegebenenfalls gespeichertes Schaltkennzeichen diesem Prozessor anzubieten hat oder nicht.

Gemäß einer Weiterbildung der Erfindung ist vorgesehen, daß die Teilnehmeranschlußschaltungen zu Mehrfachteilnehmeranschlußschaltungen mit je einem eigenen Modulprozessor zusammengefaßt sind, der die Schaltkennzeichen von den zu einer Mehrfachteilnehmeranschlußschaltung gehörenden Teilnehmeranschlußschaltungen sammelt, und daß die Modulprozessoren einzeln nacheinander von dem beiden Prozessoren angesteuert werden und dabei die von den Teilnehmeranschlußschaltungen gesammelten Schaltkennzeichen abgeben. Mit Hilfe eines Modulprozessors können gemeinsam für die Teilnehmeranschlußschaltungen einer Mehrfachteilnehmeranschlußschaltung die Meldungen über die Betriebszustände entgegengenommen werden, sowie einer Speicherung zugeführt werden, und mit Hilfe dieses Modulprozessors kann die Auswertung der Betriebszustände der beiden Prozessoren vorgenommen werden. Die Modulprozessoren ermöglichen eine Vorverarbeitung, Sammlung und Konzentration der in den einzelnen Teilnehmeranschlußschaltungen eintreffenden Schaltkennzeichen.

Eine weitere Fortbildung der zuvor genannten Weiterbildung der Erfindung sieht vor, daß für eine Speicherung des Betriebszustandes der Prozessoren gemeinsam für die Teilnehmeranschlußschaltungen einer Mehrfachteilnehmeranschlußschaltung in dieser entsprechende Speichermittel vorgesehen sind. Dadurch wird ermöglicht, daß bei Ansteuerung einer Mehrfachteilnehmeranschlußschaltung gemeinsam für die in ihr zusammengefaßten Teilnehmeranschlußschaltungen eine gemeinsame Auswertung der Betriebszustände der beiden Konzentratorprozessoren erfolgen kann.

Eine weitere Ausgestaltung der Erfindung besteht darin, daß die Teilnehmeranschlußschaltungen, bzw. Modulprozessoren bei Normalbetriebszustand beider Prozessoren sowie bei Notbetriebszustand beider Prozessoren nur die Initialkennzeichen jedem der beiden Prozessoren anbieten, daß nach Abgabe eines Initialkennzeichens von einer Teilnehmeranschlußschaltung an einen Prozessor für jene gespeichert wird, an welchen der beiden Prozessoren das Initialkennzeichen abgegeben wurde, und daß alle weiteren Schaltkennzeichen von dieser Teilnehmeranschlußschaltung aufgrund dieser Speicherung nur demselben Prozessor angeboten werden. Gemäß dieser Ausgestaltung wird also die gemeinsame Auswertung der Betriebszustände der beiden Prozessoren auf das Eintreffen von Initialkennzeichen beschränkt. Die im Zuge einer Verbindungsherstellung eintreffenden weiteren Schaltkennzeichen werden jeweils immer nur demjenigen Prozessor angeboten, der bereits auch das betreffende Initialkennzeichen aufgenommen hat.

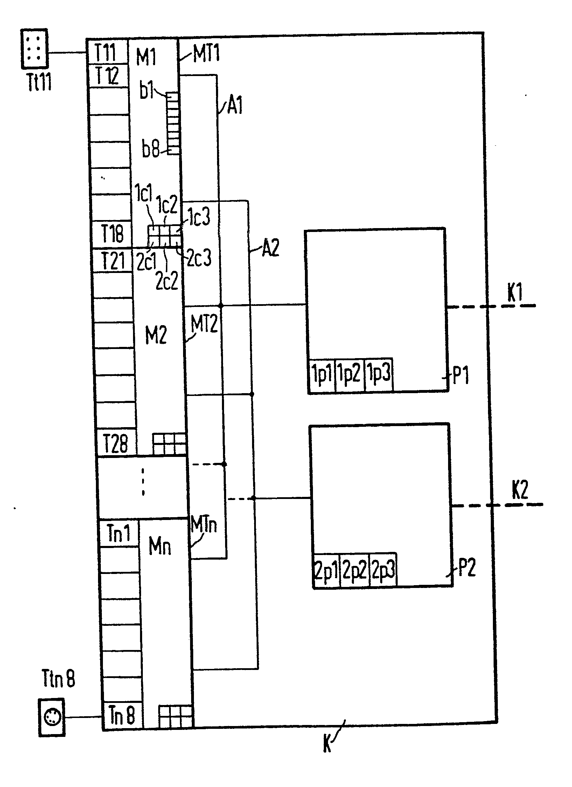

In der Zeichnung ist ein Ausführungsbeispiel der Erfindung nur in wesentlich zu ihrem Verständis beitragenden Bestandteilen dargestellt, worauf dieselbe jedoch keineswegs beschränkt ist.

Die Beschreibung setzt Fernmeldevermittlungsanlagen, insbesondere eine Fernsprechvermittlungsanlage, als bekannt voraus, in denen an eine zentralgesteuerte Vermittlungsstelle wenigstens eine Untervermittlungsstelle über belegbare Verbindungskanäle jeweils zweier voneinander unabhängiger Kanalsysteme angeschlossen ist. Fernmeldevermittlungsanalgen dieser Art, bei denen die Untervermittlungsstellen Konzentratoren sind, beschreiben die deutschen Patentschriften 3 016 511 und 3 016 547, sowie die deutschen Offenlegungsschriften 3 016 546 und 3 224 459. Ferner ist auf die Zeitschrift "telcom report" 5 (1982), No. 4 (englischsprachige Ausgabe) hinzuweisen. In diesen älteren Veröffentlichungen ist dargelegt, daß die Verbindungskanäle eines Konzentrators in zwei Übertragungssystemen mit jeweils einer vorgegebenen Anzahl von Verbindungskanälen zusammengefaßt sind. Diese Übertragungssysteme sind in den bekannten Fällen PCM-Systeme. Jedoch kann es sich hierbei auch um Zeitmultiplexsysteme anderer Art sowie um Trägerfrequenzsysteme und dergleichen System verschiedener bekannter Art handeln. In der bekannten Fällen weist jedes der beiden Übertragungssysteme pro Konzentrator ein pro System gemeinsames Übertragungsmedium auf, sowie jeweils zwei pro System gemeinsame Endgeräte. Je einer der Kanäle jedes der beiden Übertragungssysteme ist als Steuersignalkanal zwischen dem Konzentrator einerseits und der übergeordneten Vermittlungsstelle andererseits verwendet. Alle diese technischen Merkmale der bekannten Fernsprechvermittlungsanlagen treffen auch für das weiter unten anhand der Zeichnung noch im einzelnen beschriebene Ausführungsbeispiel der Erfindung zu.

In der Zeichnung ist lediglich ein Konzentrator auszugsweise dargestellt. Die genannten beiden Kanalsysteme K1 und K2 sind strichliert dargestellt. Sie führen zu einer übergeordneten Fernsprechvermittlungsanlage (es kann sich auch um eine Fernmeldevermittlungsanlage anderer Art, zum Beispiel eine Fernschreibvermittlungsanlge und dergleichen handeln), die in der Zeichnung nicht im einzelnen dargestellt ist, sondern den genannten älteren Veröffentlichungen zu entnehmen ist. Wie aus der Zeichnung weiterhin zu entnehmen ist, ist eine Anzahl von Teilnehmerstationen Tt11—Ttn8 an den Konzentrator K angeschlossen. Bei diesen Teilnehmerstationen kann es sich um Tastaturwahl-Teilnehmerstationen (Tt11), sowie um Nummernschalter-Teilnehmerstationen (Ttn8) handeln. Pro Teilnehmerstation ist eine Teilnehmeranschlußschaltung (T11 bis Tn8) vorgesehen. Die Teilnehmeranschlußschaltungen sind in Gruppen von acht Teilnehmeranschlußschaltungen zu Mehrfachteilnehmeranschlußschaltungen zusammenengefaßt. Zum Beispiel bildet die Gruppe der Teilnehmeranschlußschaltungen T11 is T18 eine Mehrfachteilnehmeranschlußschaltung. Entsprechendes gilt für die in der Zeichnung dargestellten weiteren Gruppen von Teilnehmeranschlußschaltungen.

Wie bereits aus den genannten älteren Veröffentlichungen zu entnehmen ist, werden die Teilnehmeranschlußschaltungen von an die Untervermittlungsstelle angeschlossenen Teilnehmerstellen durch jeden von zwei in der betreffenden Untervermittlungsstelle vorgesehene und je einem der beiden Übertragungssysteme zugeordnete Konzentratorprozessoren zyklisch angesteuert. Diese Teilnehmeranschlußschaltungen werden von den Konzentratorprozessoren sowohl auf ein Vorliegen von Wahlkennzeichen einschließlich jeweils den Beginn einer beabsichtigen Verbindungsherstellung anzeigenden Initialkennzeichen abgefragt, als auch mit Steuerbefehlen vorsorgt, die sie in Zusammenhang mit entsprechenden Ansteuervorgängen erhalten. Wie auch in den bekannten Fällen, handelt es sich—wie bereits erwähnt—bei der in der Zeichnung dargestellten Untervermittlungsstelle um einen Konzentrator. Die Konzentratorprozessoren P1 und P2 stehen über die beiden voneinander unabhängigen Kanalsysteme K1 und K2 mit der übergeordneten Vermittlungsstelle, das heißt mit einer in ihr vorgesehenen zentralen Steuerungseinrichtung, in bekannter Weise in Verbindung.

Wie aus der Zeichnung zu entnehmen ist, sind die Teilnehmeranschlußschaltungen T11—Tn8 zu Mehrfachteilnehmeranschlußschaltungen von je acht Teilnehmeranschlußschaltungen zusammengefaßt. Jede Mehrfachteilnehmeranschlußschaltung, zum Beispiel T11—T18, ist mit einem eigenen Modulprozessor, zum Beispiel M1, ausgestattet.

Der Modulprozessor, zum Beispiel M1, einer Mehrfachteilnehmeranschlußschaltung, zum Beispiel MT1, fragt in an sich bekannter Weise einzeln nacheinander die einzelnen Teilnehmeranschlußschaltungen, zum Beispiel T11—T18, der betreffenden Mehrfachteilnehmeranschlußschaltung ab. Hierbei nimmt der Modulprozessor sämtliche Änderungen von Schaltzuständen auf jeder der Teilnermehrleitungen auf. Jeder der Modulprozessoren, zum Beispiel M1, weist einen Speicher b1—b8 auf, der pro Teilnehmeranschlußschaltung, zum Beispiel T11, je eine Speichereinheit, zum Beispiel b1 enthält. Es sind also so viele Speichereinheiten vorgesehen, wie Teilnehmeranschlußschaltungen pro Mehrfachteilnehmeranschlußschaltung. Jede Speichereinheit besteht aus einer Mehrzahl von Speicherzellen. Pro Teilnehmeranschlußschaltung werden sämtliche Leitungszustände, die nacheinander auftreten, gespeichert. Ändert sich der Leitungszustand, so macht ein Vergleich jeweils eines neu ermittelten Abfrageergebnisses mit gespeicherten früheren Abfrageergebnissen die jeweilige Änderung des Leitungszustandes erkennbar. Diese Vorgänge sind an sich vielfältig bekannt. In dieser Weise ermittelt der Modulprozessor einer Mehrfachteilnehmeranschlußschaltung sämtliche pro Teilnehmeranschlußschaltung eintreffenden Schaltkennzeichen. Diese Schaltkennzeichen können Initialkennzeichen, Wahlkennzeichen und weitere Schaltkennzeichen, zum Beispiel für Facilities sein. Unter einem Initialkennzeichen ist dejenige Schaltkennzeichen zu verstehen, welches den Beginn einer beabsichtigten Verbindungsherstellung anzeigt. Bei Teilnehmerstationen mit Schleifenimpulsgabe besteht das Initialkennzeichen zum Beispiel darin, daß die Teilnehmerleitungsschleife geschlossen wird, was auch als "Anrufsignal" oder "Teilnehmeranruf" bezeichnet wird.

Der Modulprozessor einer Mehrfachteilnehmeranschlußschaltung nimmt also eine Datenvorverarbeitung und Datenkonzentration vor, indem er aus den bei zyklisch nacheinander stattfindenden Abfragevorgängen ermittelten einzelnen Schultzuständen jeder der Teilnehmeranschlußleitungen nach dem bekannten Prinzip des "last look" Initialkennzeichen, Wahlkennzeichen und weitere Schaltkennzeichen rekonstruiert. Diese Kennzeichen werden von einem Modulprozessor mit Hilfe der Speichereinheiten b1—b8 gewonnen und liegen dann in entsprechenden Teilen dieser Speichereinheiten abrufbereit vor.

Die Mehrfachteilnehmeranschlußschaltungen werden von den beiden Konzentratorprozessoren P1 und P2 zyklisch nacheinander angesteuert. Eine Mehrfachteilnehmeranschlußschaltung wird zu diesem Zeitpunkt immer nur von einem der beiden Konzentratorprozessoren angesteuert. Im übrigen aber arbeiten die beiden Konzentratorprozessoren unabhängig voneinander. Jeder der beiden Konzentratorprozessoren verfügt über ein eigenes Leitungssystem. Hierbei handelt es sich um die beiden Leitungssysteme A1 und A2. Jeder der beiden Konzentratorprozessoren ist also über jeweils sein Leitungssystem mit jeder der Mehrfachteilnehmeranschlußschaltungen MT1—MTn verbunden. Jeder der beiden Konzentratorprozessoren steuert einzeln nacheinander jede der Mehrfachteilnehmeranschlußschaltungen an. Jeder der beiden Konzentratorprozessoren steht also jeweils in einem Zeitpunkt im Datenaustausch immer nur mit einer der Mehrfachteilnehmeranschlußschaltungen.

Für diese Einzelansteuerung ist jeder der Modulprozessoren M1—Mn mit entsprechenden Anschaltemitteln ausgestattet. Die Anschaltung erfolgt in bekannter Weise durch Ansteuerung jeweils einer Mehrfachteilnehmeranschlußschaltung, zu Beispiel MT1, mittels einer ihr individuell zugeordneten Adresse. Sämtliche Mehrfachteilnehmeranschlußschaltungen haben also jeweils eine eigene Adresse. Zur Ansteuerung einer Mehrfachteilnehmeranschlußschaltung durch einen der beiden Konzentratorprozessoren gibt dieser also zunächst die Adresse über sein Leitungssystem ab, woraufhin in an sich bekannter Weise die jeweils angesteuerte Mehrfachteilnehmeranschlußschaltung dadurch reagiert, daß in ihr die genannten Anschaltemittel betätigt werden.

Jeder der beiden Konzentratoren kann mehrere verscheidene Betriebszustände einnehmen. Im Normalbetriebszustand ist ein Konzentratorprozessor, zum Beispiel P1, einschließlich des ihm zugeordneten Kanalsystems, zum Beispiel K1 voll funktionsfähig. Tritt auf dem Kanalsystem, zum Beispiel K1, eines Konzentratorprozessors, zum Beispiel P1, eine Störung auf, die für den betreffenden Konzentratorprozessor erkennbar ist, so geht er vom Normalbetriebszustand in einen sich hiervon unterscheidenden Notbetriebszustand über. Dieser ist also dadurch gekennzeichnet, daß das betreffende Kanalsystem funkionsgestört ist, nicht aber der betreffende Konzentratorprozessor selber. Ferner kann ein Konzentratorprozessor auch den Gestörtzustand einnehmen. In diesem Falle sind seine eigenen Funktionen von einer Störung betroffen. Im Gestörtzustand setzt ein Konzentratorprozessor jedoch noch seine zyklischen Abfragevorgänge bei den Modulprozessoren der Mehrfachteilnehmeranschlußschaltungen fort.

Befindet sich ein Konzentratorprozessor im Normalbetriebszustand, so erkennt er eine Störung auf dem ihm zugeordneten Kanalsystem selber. Er geht selbständig vom Normalbetriebszustand in den Notbetriebszustand über. Tritt jedoch eine Störung im betreffenden Konzentratorprozessor selber ein, so wird dies vom Zentralsteuerwerk der übergeordneten Fernsprechvermittlungsstelle erkannt und dem betreffenden Konzentratorprozessor gemeldet. Ebenfalls erfolgt eine Meldung an einen Konzentratorprozessor, wenn er vom Gestörtzustand wieder in den Normalbetriebszustand zurückkehrt. Diese Meldungen erfolgen über das dem jeweiligen Konzentratorprozessor zugeordnete Kanalsystem.

Der jeweils bestehende Betriebszustand eines Konzentratorprozessors, zum Beispiel P1, ist in ihm in hierfür vorgesehen Speichergliedern 1p1—1p3 bzw. 2p1—2p3 gespeichert. Beim Konzentratorprozessor P1 möge das Speicherglied 1p1 zur Speicherung des Normalbetriebszustandes dienen. Das Speicherglied 1p2 möge zur Speicherung des Notbetriebszustandes dienen und das Speicherglied 1p3 zur Speicherung des Gestörtzustandes.

Jeder der beiden Konzentratorprozessoren meldet nun bei Ansteuerung eines Modulprozessors zugleich jeweils einen eigenen Betriebszustand jedem von ihnen. Damit ist jeder der Teilnehmeranschlußschaltungen einer Mehrfachteilnehmeranschlußschaltung jeweils der Betriebszustand jedes der beiden Konzentratorprozessoren gemeldet. Für die Teilnehmeranschlußschaltungen einer Mehrfachteilnehmeranschlußschaltung wird im Modulprozessor derselben der jeweils bestehende Betriebszustand jedes der beiden Konzentratorprozessoren gespeichert, den der jeweilige Konzentratorprozessor beim letzten Ansteuervorgang der betreffenden Mehrfachteilnehmeranschlußschaltung gemeldet hat. Im Modulprozessor M1 dienen die Speicherglieder 1c1, 1c2 und 1c3 in dieser Reihenfolge zur Speicherung des Normalbetriebszustandes, des Notbetriebszustandes und des Gestörtzustandes des Konzentratorprozessors P1. In entsprechender Weise diesen die Speicherglieder 2c1—2c3 zur Speicherung der Betriebszustände des Konzentratorprozessors P2. Folglich liegen bei kontinuierlicher zyklischer Ansteuerung der Modulprozessoren der Mehrfachteilnehmeranschlußschaltungen durch die Konzentratorprozessoren in den einzelnen Modulprozessoren die jeweils bestehenden Betriebszustände jedes der beiden Konzentratorprozessoren gespeichert vor. Entsprechendes gilt für die weiteren Modulprozessoren der übrigen Mehrfachteilnehmeranschlußschaltungen.

Hat ein Konzentratorprozessor, zum Beispiel P1, eine der Mehrfachteilnehmeranschlußschaltungen, zum Beispiel MT1, angesteuert, so fragt er damit ihren Modulprozessor, zum Beispiel M1 auf ein Vorliegen von Initialkennzeichen, Wahlkennzeichen und weiteren Schaltkennzeichen ab. Der betreffende Modulprozessor soll nun in ihm pro Teilnehmeranschlußschaltung gespeicherte Kennzeichen der zuvor angegebenen Art an den jeweils ansteuernden Konzentratorprozessor übertragen. Dies richtet sich nun danach, wie die Betriebszustände der beiden Konzentratorprozessoren zum jeweils momentanen Zeitpunkt sind. Befinden sich beide Konzentratorprozessoren im Normalbetriebszustand, so überträgt der betreffende Modulprozessor nach seiner Ansteuerung durch den Konzentratorprozessor im Modulprozessor pro Teilnehmeranschlußschaltung gespeicherte Kennzeichen der zuvor angegebenen Arten. Auf diese Weise sammelt jeder der beiden Konzentratorprozessoren bei sämtlichen Mehrfachteilnehmeranschlußschaltungen Initialkenneichen sowie Wahlkennzeichen und Schaltkennzeichen weiterer Arten ein. Befindet sich jedoch ein eine Mehrfachteilnehmeranschlußschaltung gerade ansteuernder Konzentratorprozessor im Notbetriebszustand, während sich der andere Konzentratorprozessor im Normalbetriebszustand befindet, so bietet der Modulprozessor der betreffenden Mehrfachteilnehmeranschlußschaltung jeweils vorliegende Schaltkennzeichen nicht

dem gerade diese Mehrfachteilnehmeranschlußschaltung ansteuernden Konzentratorprozessor an. Eine Übertragung dieser Schaltkennzeichen an den sich im Notbetriebszustand befindenden Konzentratorprozessor erfolgt nicht.

Befindet sich einer der Konzentratorprozessoren in dem zuvor erwähnten Notbetriebszustand, so kann er einen Notbetrieb abwickeln. Diese Betriebsweise ist relativ ausführlich in der bereits genannten deutschen Offenlegungsschrift 3 224 459 beschrieben. Ein Konzentratorprozessor kann in dieser Betriebsweise arbeiten, wenn das ihm zugeordnete Kanalsystem von einer Störung betroffen ist, er selbst aber noch intakt ist. In diesem Falle kann er Internverkehr abwickeln, das heißt, Verbindungen zwischen zwei an ein und demselben Konzentrator angeschlossenen Teilnehmerstellen herstellen, aufrechterhalten und auslösen. Hierzu ist jeder der Konzentratorprozessoren mit den erforderlichen Einrichtungen (zum Beispiel Wahlempfänger, Signalgeber und der-gleichen) in bekannter Weise ausgestattet. Bei dieser besonderen Betriebsweise ist auch die Arbeitsweise eines Konzentratorprozessors und der gesamte Ablauf seiner Funktionsvorgänge anders als im Normalbetriebszustand.

Befindet sich ein Konzentratorprozessor im Notbetriebszustand, so ist alleine damit noch nicht festgelegt, daß er auch in der Notbetriebsweise arbeitet. Befindet sich nur einer der beiden Konzentratorprozessoren im Notbetriebszustand, so wird kein Notbetrieb abgewickelt, sondern nur der andere, also der noch intakte Konzentrator-prozessor wickelt den gesamten Vermittlungsver-kehr ab. Dies ergibt zwar eine erhebliche Herabsetzung der Verkehrsleistung des Prozessors, ermöglicht aber eine Fortsetzung des Normalbetriebs, wobei Chancengleichheit für alle an den betreffenden Konzentrator angeschlossenen Teilnehmerstellen gewährleistet ist.

Befindet sich also ein Konzentratorprozessor im Notbetriebszustand, so hängt die tatsächliche Durchführung des Notbetriebs davon ab, ob sich auch der andere Prozessor im Notbetriebszustand befindet oder im Gestörtzustand. Befindet sich der andere Konzentratorprozessor im Normalbetriebszustand, so bietet jeder der Modulprozesso-ren der verschiedenen Mehrfachteilnehmeran-schlußschaltungen die zur Abgabe an einen der Konzentratorprozessoren vorliegenden Schalt-kennzeichen nur demjenigen Konzentratorprozes-sor an, der sich im Normalbetriebszustand befindet; diese Schaltkennzeichen werden also nur an diesen Konzentratorprozessor übertragen, nicht aber an denjenigen Konzentratorprozessor, der sich im Notbetriebszustand befindet.

Befinden sich beide Konzentratorprozessoren im Notbetriebszustand, so bieten sie ihre Schaltkennzeichen beiden Konzentratorprozessoren an. Die Schaltkennzeichen können also an den einen oder den anderen Konzentratorprozessor übertragen werden.

Befindet sich ein Konzentratorprozessor im Notbetriebszustand und der andere Konzentratorprozessor im Gestörtzustand, so bietet jeder Modulprozessor seine Schaltkennzeichen nur demjenigen Konzentratorprozessor an, der sich im Notbetriebszustand befindet. Diese Schaltkennzeichen werden also nur an diesen Konzen-tratorprozessor von der verschiedenen Modulpro-zessoren übertragen.

Wie ausgeführt wurde, geht ein Konzentratorprozessor vom Normalbetriebszustand in den Notbetriebszustand über, wenn sein Kanalsystem gestört ist. Es besteht darüber hinaus auch die Möglichkeit, daß dieser Betriebsweisenwechsel auch dann vorgenommen wird, wenn das Zentral-steuerwerk der übergeordneten Vermittlungs-stelle, an die die verschiedenen Konzentratoren angeschlossen sind, außer Betrieb kommt. In diesem Falle würden dann also zugleich sämtli-che Konzentratorprozessoren sämtlicher ange-schlossener Konzentratoren in den Notbetriebs-zustand übergehen. Ein solcher Betriebsweisen-wechsel kann auch unter der Voraussetzung, daß die Signalkanäle der den Konzentratorprozessoren zugeordneten Kanalsysteme über das zentrale Koppelfeld der übergeordneten Vermittlungs-stelle zu deren Zentralsteuerwerk hindurchge-schaltet werden, der zuvor angegebene Betriebsweisenwechsel vorgenommen werden, wenn das zentrale Koppelfeld der übergeordneten Vermittlungsstelle störungsbedingt außer Betrieb gesetzt wird.

Der Gestörtzustand eines Konzentratorprozessors kann jeweils unterschiedliche Ausmaße annehmen. Der Gestörtzustand kann sich darauf beschränken, daß bestimmte Verarbeitungsvorgänge nicht ordnungsgemäß abgewickelt werden, daß aber der sich im Gestörtzustand befindende Konzentratorprozessor nach wie vor die verschiedenen Modulprozessoren der Mehrfachteilnehmeranschlußschaltungen ansteuert. Für diesen Fall ist in der beschriebenen Weise vorgesehen, daß bei der Ansteuerung eines Modulprozessors durch den sich im Gestörtzustand befindenden Konzentratorprozessor dieser sich selbst als im Gestörtzustand sich befindend kennzeichnet und hierüber ein entsprechendes Signal an den jeweils abgefragten Modulprozessor überträgt. Es erfolgt eine dementsprechende Speicherung in dem dem jeweiligen Konzentra-torprozessor zugeordneten entsprechenden Spei-cherglied, zum Beispiel 1c3 oder 2c3. Der Gestört-zustand eines Konzentratorprozessors kann aber auch darin bestehen, daß er auch keine Ansteuervorgänge mehr durchführt. Ein solcher Konzentratorprozessor wird von dem Modulprozessoren also daran erkannt, daß Ansteuerungvorgänge seitens des betreffenden Konzentratorprozessors überhaupt nicht mehr stattfinden Diese Ansteuerungsvorgänge finden normalerweise in bestimmten zeitlichen Mindestabständen statt. Ist ein Konzentratorprozessor von einer solchen totalen Störung betroffen, so kann ein Modulprozessor dies hieran erkennen, daß innerhalb eines Zeitraumes, der der regelmäßigen Abfrange durch einen Konzentratorprozessor entspricht, keine Abfragevorgänge seitens dieses Konzentratorprozessors erfolgen. Hierzu ist jeder Modulprozessor mit einer Zeitmeßeinrichtung pro Konzentgatorprozessor ausgerüstet. Mit dieser Zeitmeßeinrichtung kann jeder Modulprozessor die Regelmäßigkeit der Abfragevorgänge jedes der Konzentratorprozessoren überwachen. Erkannt nun ein Modulprozessor auf diese Weise den Gestörtzustand eines der Konzentratorprozessoren, der also seine zyklischen Abfragevorgänge nicht mehr weiter fortsetzt, so speichert der betreffende Modulprozessor den Gestörtzustand des jeweiligen Konzentratorprozessors in der bereits erläuterten Weise.

Hat ein Konzentratorprozessor, zum Beispiel P1, eine der Mehrfachteilnehmeranschlußschaltungen, zum Beispiel MT1, angesteuert, so fragt er damit den Modulprozessor, zum Beispiel M1 dieser Mehrfachteilnehmeranschlußschaltung auf ein Vorliegen von Initialkennzeichen, Wahlkennzeichen und weiterer Schaltkennzeichen ab. Der betreffende Modulprozessor überträgt daraufhin in ihm pro Teilnehmeranschlußschaltung gespeicherte Kennzeichen der zuvor angegeben Art. Auf diese Weise sammelt jeder der beiden Konzentratorprozessoren bei sämtlichen Mehrfachteilnehmeranschlußschaltungen Initialkennzeichen sowie Wahlkennzeichen und Schaltkennzeichen weiterer Arten ein. In an sich bekannter und hier nicht im einzelnen beschriebener Weise ist dafür gesorgt, daß Initialkennzeichen, Wahlkennzeichen und weitere Schaltkennzeichen, die ein Konzentratorprozessor bereits von einer Mehrfachteilnehmeranschlußschaltung, bzw. ihren Modulprozessor abgefragt hat, nicht noch ein zweites Mal von dem anderen Konzentratorprozessor abgefragt werden. In diesem Zusammenhang kann vorgesehen werden, daß nach einer Aufnahme eines Initialkennzeichens, das von einer bestimmten Teilnehmerstelle abgegeben worden ist, für die ihm zugeordnete Teilnehmeranschlußschaltung im Speicher des jeweiligen Modulprozessors gespeichert wird, an welchen der beiden Konzentratorprozessoren es weitergeleitet worden ist. Diese Speicherung erfolgt in derjenigen Speichereinheit, die der betreffenden Teilnehmeranschlußschaltung innerhalb der jeweiligen Mehrfachteilnehmeranschlußschaltung zugeordnet ist. Durch diese Speicherung wird bewirkt, daß eine Teilnehmeranschlußschaltung nach Abgabe des Initialkennzeichens für die Dauer einer herzustellenden Verbindung bis zur Verbindungsauslösung jeweils einem der Konzentratorprozessoren zugeordnet ist und bleibt. Ist also ein Initialkennzeichen, das von einem bestimmten Teilnehmer abgegeben worden ist, von einem der beiden Konzentratorprozessoren übernommen worden, so werden sämtliche weiteren, die jeweils herzustellende Verbindung betreffenden Wahlkennzeichen und weiteren Schaltkennzeichen auch nur von demselben Konzentratorprozessor übernommen. Die Konzentratorprozessoren geben die von der Mehrfachteilnehmeranschlußschaltungen und deren einzelnen Teilnehmeranschlußschaltungen übernommenen Initialkennzeichen, Wahlkennzeichen und weiteren Schaltkennzeichen in an sich bekannter Weise zur zentralen Steuerungseinrichtung der übergeodneten Fernsprechvermittlungsanlage weiter.

Wie sich aus der bisherigen Beschreibung ergibt, steht bei neu auftretenden Initialkennzeichen zunächst offen, von welchem der beiden Konzentratorprozessoren sie jeweils aufgenommen werden. Wie ausgeführt wurde, arbeiten die beiden Konzentratorprozessoren unabhängig voneinander. Tritt ein Initialkennzeichen seitens einer Teilnehmerstation in der ihr zugeordneten Teilnehmeranschlußschaltung neu auf und erscheint es neu in der ihr entsprechenden Speichereinheit, so wird es von demjenigen Konzentratorprozessor abgerufen und übernommen, der jeweils der erste ist, der die betreffende Mehrfachteilnehmeranschlußschaltung ansteuert. Dies ist also im wesentlichen zufallsbedingt.

Es kann nun der Fall eintreten, daß sämtliche Kanäle eines Kanalsystems, zum Beispiel des Kanalsystems K1 belegt sind. Diese Kanäle können durch bereits durchgeschaltet Verbindungen belegt sein, jedoch auch durch Verbindungen, die sich noch im Statium der Verbindungsherstellung befinden. Es kann sich also auch um Verbindungen handeln, für die noch sämtliche Ziffern einer Vielstelligen Teilnehmernummer abgegeben worden sind. Für solche Verbindungen müsen also noch die erforderlichen Wahlkennzeichen übertragen werden. In dem angenommenen Beispiel hat dies also der Konzentratorprozessor R1 zu bewerkstelligen. Er hat also weiterhin Wahlkennzeichen und weitere Schaltkennzeichen von den Mehrfachteilnehmeranschlußschaltungen bzw. den ihnen zugeordneten Modulprozessoren abzufragen und zu übernehmen.

Da in dem zuvor angenommenen Funktionsbeispiel jedoch sämtliche Kanäle des Kanalsystems K1 bereits belegt sind, hätte es keinen Sinn, wenn der Konzentratorprozessor P1 in diesem Betriebszustand auch noch Initialkennzeichen abrufen und übernehmen würde. Deshalb ist vorgesehen, daß bei Belegstein sämtlicher Kanäle eines der beiden Übertragungssysteme der dem betreffenden Übertragungssystem zugeordnete Konzentratorprozessor (P1) jedem Modulprozessor in Zusammenhang mit der Ansteuerung ein Abweisungskennzeichen überträgt. Steuert also der Konzentratorprozessor P1 zum Beispiel gerade den Modulprozessor M1 an, so fordert er damit eine Übertragung von Kennzeichen an, die in den einzelnen Speichereinheiten dieses Modulprozessors gespeichert vorliegen. Das dabei von dem betreffenden Konzentratorprozessor P1 an den betreffenden Modulprozessor M1 übertragene Abweisungskennzeichen bewirkt in diesem, daß eine Übermittlung vorliegender Initialkennzeichen an ihn verhindert ist, wohingegen Übermittlungen von Wahlkennzeichen von dem Modulprozessor zu dem Konzentratorprozessor durchführbar bleiben. Erhält also ein Modulprozessor von einem Konzentratorprozessor ein Abweisungskennzeichen, so übermittelt er an diesen von den in seinen Speichereinheiten gespeicherten Initialkennzeichen, Wahlkennzeichen und weiteren Schaltkennzeichen nur die Wahlkennzeichen und die weiteren Schaltkennzeichen, nicht aber die Initialkennzeichen. Dadurch wird bewirkt, daß Neubelegungen nur über Kanäle desjenigen Kanalsystems aufgenommen werden können, in dem wenigstens noch ein Kanal frei ist. Unter einer Neubelegung ist also der Beginn einer Verbindungsherstellung zu verstehen, bei der ein Initialkennzeichen gebildet wird, und in deren Zusammenhang in dem Konzentrator von dem betreffenden Konzentratorprozessor ein freier Kanal desjenigen Kanalsystems belegt wird, das diesem Konzentratorprozessor zugeordnet ist.

**Patentansprüche**

1. Schaltungs-Betriebsverfahren für Fernmeldevermittlungsanlagen, insbesondcere Fernsprechvermittlungsanlagen, in denen an eine zentralgesteuerte Vermittlungsstelle wenigstens eine Untervermittlungsstelle (K) über belegbare Verbindungskanäle jeweils zweier voneinander unabhängiger Kanalsysteme (K1, K2) angeschlossen ist, und in denen diese Verbindungskanäle in vorgegebenen Anzahlen zu zwei Übertragungssystemen (zum Beispiel Trägerfrequenzsystemen, Zeitmultiplexsystemen, PCM-Systemen) mit jeweils einem pro System gemeinsamen Übertragungsmedium und jeweils zwei pro System gemeinsamen Endgeräten (P1, P2) gehören, und in denen je einer der Kanäle jedes der beiden Übertragungssysteme als Steuersignalkanal verwemdet wird, und in denen Teilnehmeranschlußschaltungen (T11—Tn8) von an die Untervermittlungsstelle (K) angeschlossenen Teilnehmerstellen (Tt11—Ttn8) durch jede von zwei in den betreffenden Untervermittlungsstelle (K) vorgesehene, je einem der beiden Übertragungssysteme zugeordnete und unabhängig voneinander arbeitende Prozessoren (P1, P2) zyklisch ansgesteuert und zur Aufnahme von über die Teilnehmerleitung eintreffenden Schaltkennzeichen, (zum Beispiel den Beginn einer beabsichtigten Verbindungsherstellung anzeigenden Initialkennzeichen, ferner Wahlkennzeichen, Sonderkennzeichen, Auslösekennzeichen), abgetastet werden, und in denen die Prozessoren (P1, P2) bei einer Störung ihres jeweiligen Übertragungssystems einen sich vom Normalbetriebszustand unterscheidenden Notbetriebszustand einnehmen, dadurch gekennzeichnet, daß die Prozessoren (P1, P2) bei einer Störung ihrer eigenen Funktionen einen sich ebenfalls vom Normalbetriebszustand sowie vom Notbetriebszustand unterscheidenden Gestörtzustand einnehmen, daß jeder der Prozessoren (P1, P2) bei Ansteuerung der Teilnehmeranschlußschaltungen (T11—Tn8) jeweils seinen Betriebszustand jeder von ihnen meldet, daß die Teilnehmeranschlußschaltungen (T11—Tn8) den Betriebszustand jedes der beiden Prozessoren (P1, P2) speichern, und daß die Teilnehmeranschlußschaltungen (T11—Tn8) ihre Schaltkennzeichen bei Normalbetriebszustand beider Prozessoren (P1, P2) sowie bei Notbetriebszustand beider Prozessoren (P1, P2) jedem der beiden Prozessoren (P1, P2) anbieten, bei Normalbe

triebszustand eines der beiden Prozessoren (P2, P1) und Notbetrietriebszustand des anderen der beiden Prozessoren (P1, P2) nur dem Prozessor (z.B. P1) im Normalbetriebszustand anbieten und bei Notbetriebszustand eines der beiden Prozessoren (z.B. P2) und bei Gestörtzustand des anderen der beiden Prozessoren (z.B. P1) nur dem Prozessor (z.B. P2) im Notbetriebszustand anbieten.

2. Schaltungs-Betriebsverfahren nach Anspruch 1, dadurch gekennzeichnet, daß ein die Teilnehmeranschlußschaltungen (z.B. T11—T18) zu Mehrfachteilnehmeranschlußschaltungen (z.B. MT1) zusammenfassender Modulprozessor (z.B. M1) die Schaltkennzeichen von den zu einer Mehrfachteilnehmeranschlußschaltung (z.B. MT1) gehörenden Teilnehmeranschlußschaltungen (z.B. T11—T18) sammelt, und daß die Modulprozessoren (M1—Mn) einzeln nacheinander von der beiden Prozessoren (P1, P2) angesteuert werden und dabei die von den Teilnehmeranschlußschaltungen (T11—Tn8) gesammtelten Schaltkennzeichen abgeben.

3. Schaltungs-Betriebsverfahren nach Anspruch 1, dadurch gekennzeichnet, daß für eine Speicherung des Betriebszustandes der Prozessoren (P1, P2) gemeinsam für die Teilnehmeranschlußschaltungen (z.B. T11—T18) einer Mehrfachteilnehmeranschlußschaltung (z.B. MT1) in dieser entsprechende Speichermittel (1c1—2c3) vorgesehen sind.

4. Schaltungs-Betriebsverfahren nach Anspruch 1 oder 2, dadurch gekennzeichnet, daß die Teilnehmerschaltungen (z.B. T11—T18), bzw. Modulprozessoren (z.B. M1) bei Normalbetriebszustand beider Prozessoren (P1, P2) sowie bei Notbetriebszustand beider Prozessoren (P1, P2) nur die Initialkennzeichen jedem der beiden Prozessoren (P1, P2) anbieten, daß nach Abgabe eines Initialkennzeichens von einer Teilnehmeranschlußschaltung (z.B. T11) an einen Prozessor (z.B. P1) für jene gespeichert wird, an welchen der beiden Prozessoren (P1, P2) das Initialkennzeichen abgegeben wurde, und daß alle weiteren Schaltkennzeichen von dieser Teilnehmeranschlußschaltung (z.B. T11) aufgrund dieser Speicherung nur demselben Prozessor (z.B. P1) angeboten werden.

**Revendications**

1. Procédé de fonctionnement d'un circuit pour des installations de commutation de télécommunications, notamment des installations de commutation téléphonique, dans lesquelles au moins un central secondaire (K) est raccordé à un central commandé d'une manière centrale, par l'intermédiaire de canaux de liaison, pouvant être occupés, de respectivement deux systèmes de canaux (K1, K2) dépendant l'un de l'autre et dans lesquels ces canaux de liaison appartiennent à deux systèmes de transmission (par exemple des systèmes à fréquences porteuses, des systèmes de multiplexage temporel, des systèmes MIC) comportant chacun un milieu de transmission commun pour chaque système et respectivement deux appareils terminaux (P1, P2) communs pour chaque système, et dans lesquelles respectivement l'un des canaux de chacun des deux systèmes de transmission est utilisé en tant que canal de transmission de signaux de commande, et dans lesquelles des circuits de raccordement d'abonnés (T11—Tn8) de postes d'abonnés (Tt11—Ttn8), raccordés au central secondaire (K), sont commandés cycliquement par respectivement l'un des deux processeurs (P1, P2) prévus dans le central secondaire considéré (K) et associés respectivement à l'un des deux systèmes de transmission et opérant indépendamment l'un de l'autre, et sont explorés pour la réception d'indicatifs de commutation arrivant par l'intermédiaire de la ligne d'abonné (par exemple des indicatifs initiaux indiquant le début de l'établissement d'une liaison envisagée, et en outre des indicatifs de sélection, des indicatifs particuliers, des indicatifs d'autorisation), et dans lesquelles, dans le cas d'une perturbation de leur système de transmission respectif, les processeurs (P1, P2) prennent un état de fonctionnement d'urgence différent de l'état de fonctionnement normal, caractérisé par le fait que, dans le cas d'une perturbation de leurs fonctions propres, les processeurs (P1, P2) passent à un étant perturbé également différent de l'état de fonctionnement normal et de l'état de fonctionnement d'urgence, que, lors de la commande des circuits de raccordement d'abonnés (T11—Tn8), chacun des processeurs (P1, P2) signale son état de fonctionnement à chacun de ces circuits, que les circuits de raccordement d'abonné (T11, Tn8) mémorisent l'état de fonctionnement de chacun des deux processeurs (P1, P2), que les circuits de raccordement d'abonnés (T11—Tn8) envoient leurs indicatifs de commutation à chacun des deux processeurs (P1, P2), lorsque ces derniers sont dans l'état de fonctionnement normal ainsi que dans l'état de fonctionnement d'urgence, et envoient leurs indicatifs uniquement au processeur (par exemple P1) situé dans l'état de fonctionnement normal, lorsque l'un des deux processeurs (P2, P1) est dans l'état de fonctionnement normal et que l'autre des deux processeurs (P1, P2) est dans l'état de fonctionnement d'urgence, et envoient leurs indicatifs uniquement au processeur (par exemple P2) situé dans l'état de fonctionnement d'urgence, dans le cas où l'un des deux processeurs (par exemple P2) est dans l'état de fonctionnement d'urgence et que l'autre des deux processeurs (par exemple P1) est dans l'état perturbé.

2. Procédé de fonctionnement suivant la revendication 1, caractérisé par le fait qu'un processeur-module (par exemple M1), qui réunit les circuits de raccordement d'abonnés (par exemple T11—T18) sous la forme de circuits de raccordement d'abonnés multiples (par exemple MT1), rassemble les indicatifs de commutation de circuits de raccordement d'abonnés (par exemple T11—T18) associés à un circuit de raccordement d'abonnés multiples (par exemple MT1), et que les processeurs-modules (M1—Mn) sont commandés individuellement et successivement par les deux processeurs (P1, P2) et délivrent les indicatifs de commutation collectés par les circuits de raccordement d'abonnés (T11—Tn8).

3 Procédé de fonctionnement d'un circuit selon la revendication 1, caractérisé en ce que pour la mémorisation de l'état de fonctionnement des processeurs (P1, P2) il est prévu, en commun, pour les circuits de raccordement d'abonnés (par exemple T11—T18), d'un circuit (MT1) de raccordement d'abonnés multiples, des moyens de mémoire (1c1—2c3) correspondant dans ce circuit.

4. Procédé de fonctionnement d'un circuit selon la revendication 1 ou 2, caractérisé par le fait que les circuits de raccordement d'abonnés (par exemple T11—T18) ou les processeurs-modules (par exemple M1) délivrent uniquement les indicatifs initiaux à chacun des deux processeurs (P1, P2), lorsque ces derniers sont dans l'état de fonctionnement normal ainsi que dans l'état de fonctionnement d'urgence, par le fait qu'après l'envoi d'un indicatif initial par un circuit de raccordement d'abonné (par exemple T11) à un processeur (par exemple P1), l'indication de celui des deux processeurs (P1, P2) auquel l'indicatif initial a été délivré, est mémorisée pour chaque circuit et par le fait que, sur la base de cette mémorisation, tous les autres indicatifs de commutation sont envoyés par ce circuit de raccordement d'abonné (par exemple T11) uniquement au même processeur (par exemple P1).

**Claims**

1. Circuit operation method for telecommunication exchanges, particularly telephone exchanges in which at least one subexchange (K) is connected to a centrally controlled exchange via seizable connecting channels of in each case two mutually independent channel systems (K1, K2) and in which these connecting channels belong in predetermined numbers of two transmission systems (for example carrier-frequency systems, time division multiplex systems, PCM systems) having in each case one transmission medium which is common per system and in each case two terminals (P1, P2) which are common per system, and in which one each of the channels of each of the two transmission systems is used as control signal channel, and in which subscriber line circuits (T11—Tn8) of subscriber stations (Tr11—Ttn8) connected to the subexchange (K) are cyclically selected by each of two processors (P1, P2) which are provided in the relevant subexchange (K) and are each allocated to one of the two transmission systems and operate independently of one another, and are scanned for accepting switching codes arriving via the subscriber line (for example initial codes indicating the start of an intended setting-up of a connection, furthermore dialling codes, special codes, release codes), and in which the processors (P1, P2) assume an emergency operating mode which differs from the normal operating mode when there is a fault in their respective transmission system, characterized in that the processors (P1, P2) assume a fault mode which also differs from the normal operating mode and from the emergency operating mode when their own functions are faulty, that each of the processors (P1, P2) in each case signals, when selecting the subscriber line circuit (T11—Tn8), its operating mode to each of these, that the subscriber line circuits (T11—Tn8) store the operating mode of each of the two processors (P1, P2), and that the subscriber line circuits (T11—Tn8) offer their switching codes to each of the two processors (P1, P2) with normal operating mode of both processors (P1, P2) and with emergency operating mode of both processors (P1, P2), only to the processor (for example P1) in normal operating mode with normal operating mode of one of the two processors (P2, P1) and emergency operating mode of the other one of the two processors (P1, P2), and only to the processor (for example P2) in emergency operating mode with emergency operating mode of one of the two processors (for example P2) and with fault mode of the other one of the two processors (for example P1).

2. Circuit operation method according to Claim 1, characterized in that a module processor (for example M1) combining the subscriber line circuits (for example T11—T18) to form multiple subscriber line circuits (for example MT1), collects the switching codes from the subscriber line circuits (for example T11—T18) belonging to one multiple subscriber line circuit (for example MT1), and that the module processors (M1—Mn) are individually successively selected by the two processors (P1, P2) and during this process emit the switching codes collected from the subscriber line circuits (T11—Tn8).

3. Circuit operation method accoridng to Claim 1, characterized in that, for storing the operating mode of the processors (P1, P2) jointly for the subscriber line circuits (for example T11—T18) of a multiple subscriber line circuit (for example MT1), appropriate storage means (1c1—2c3) are provided in the latter.

4. Circuit operation method according to Claim 1 or 2, characterized in that the subscriber circuits (for example T11—T18) or module processors (for example M1) only offer the initial codes to each of the two processors (P1, P2) with normal operating mode of both processors (P1, P2) and with emergency operating mode of both processors (P1, P2), that after the delivery of an initial code from a subscriber line circuit (for example T11) to a processor (for example P1), information is stored about which of the two processors (P1, P2) the initial code was delivered to, and that all further switching codes from this subscriber line circuit (for example T11) are only presented to the same processor (for example P1) on the basis of this storage.